# EUROPÄISCHE PATENTSCHRIFT

(11) **EP 3 430 863 B1**
(45) Veröffentlichungstag und Bekanntmachung des Hinweises auf die Patenterteilung: **04.05.2022**
(21) Anmeldenummer: 17710272.0
(22) Anmeldetag: 13.03.2017
(51) Int. Cl.: H05B 47/19, H05B 47/18

(54) **HOCHFUNKTIONALES BETRIEBSGERÄT**
HIGHLY FUNCTIONAL OPERATING DEVICE
APPAREIL D'EXPLOITATION TRÈS FONCTIONNEL

(30) Priorität: 13.03.2016 DE 102016002963
(43) Veröffentlichungstag der Anmeldung: 23.01.2019
(73) Patentinhaber: BAG electronics GmbH, 59759 Arnsberg (DE)
(72) Erfinder: NATTKEMPER, Guido, 58730 Fröndenberg (DE); MICHAELIS, Wolfgang, 59519 Möhnesee (DE); KREMER, Thomas, 57392 Schmallenberg (DE)
(74) Vertreter: Lippert Stachow Patentanwälte Rechtsanwälte
(86) Internationale Anmeldenummer: PCT/EP2017/055835
(87) Internationale Veröffentlichungsnummer: WO 2017/157848

(56) Entgegenhaltungen:
- WO-A1-2009/100762
- WO-A1-2013/059848
- WO-A1-2013/059848
- WO-A1-2015/112637
- WO-A1-2015/112637
- WO-A2-2009/011898
- DE-A1-102006 054 785

## Beschreibung

Die Erfindung betrifft ein Beleuchtungssystem umfassend zumindest zwei Betriebsgeräte zum Betreiben zumindest eines Leuchtmittels umfassend eine Netzeingangsstufe sowie zumindest eine mit der Netzeingangsstufe verbundene Ausgangsstufe mit Ausgangsanschlüssen zum Verbinden mit dem Leuchtmittel, eine Steuereinrichtung zum Steuern der Ausgangsstufe sowie eine erste digitale, bidirektionale Steuerschnittstelle zum Anschließen an einen digitalen Steuerbus mit Adressierfunktionalität zum Empfangen von externer Steuerinformation.

Betriebsgeräte für derartige Beleuchtungssysteme sind auf dem Gebiet wohl bekannt und werden heute insbesondere zum Betreiben bzw. Speisen von LED-Einrichtungen eingesetzt. Lichtmanagementsysteme als Steuersysteme zur Übermittlung bzw. zum Verbinden derartiger Betriebsgeräte basieren häufig auf dem DALI (Digital Addressable Lighting Interface)- Standard, der aktuell unter IEC 62386 festgelegt ist und eine digitale, direktionale Steuerschnittstelle bereitstellt. Eine weitere solche Schnittstelle kann beispielsweise DSI (Digital Serial Interface) sein.

Es ist festzustellen, dass auf dem Gebiet immer komplexere Licht-Managementsysteme als Steuersysteme entwickelt werden, insbesondere dadurch, dass eine Vielzahl von Sensoren, Betriebsgeräte und/oder Datenendgeräte in ein solches Managementsystem bzw. Steuersystem integriert werden bzw. an ein solches angeschlossen werden, um komplexe Beleuchtungsaufgaben zu lösen.

Die Offenlegungsschrift WO 2013/059848 D1 betrifft ein Beleuchtungssystem umfassend wenigstens zwei Betriebsgeräte, und ein Steuergerät, welches mit den Betriebsgeräten jeweils über eine Steuerleitung verbunden ist, wobei das Steuergerät mit zumindest einer Steuerzentrale verbunden ist und die Steuerzentrale das Steuergerät über verschiedene Adressen ansprechen kann. Die Betriebsgeräte weisen jeweils eine einzelne Steuerschnittstelle auf, die an den jeweiligen Bus angeschlossen ist. Die Offenlegungsschrift WO 2015/112637 betrifft ein digitales Kommunikationsgateway, umfassend eine Beleuchtungssteuerungsnetzwerkschnittstelle zum Anschluss an ein Beleuchtungssteuerungssystem sowie eine Beleuchtungskommunikationsschnittstelle zum Anschluss an eine Mehrzahl von LED-gestützten Beleuchtungsgeräten. Dabei erfolgt eine steuerungstechnische und versorgungstechnische Anbindung der Beleuchtungsgeräte über die Kommunikationsschnittstelle mittels eines "Power Line Communications" (PLC)-Protokolls über eine 48 Volt-Versorgungsleitung. Die Speisung der Leuchtmittel der Beleuchtungseinrichtungen erfolgt durch ein "Electronic Interface Module (EIM), dass eingerichtet ist, die Versorgungssignale an einem Leistungswandler zu empfangen und in Abhängigkeit von Signalen einer Leistungswandlerschnittstelle die jeweiligen LED Schaltung zu speisen. Die Offenlegungsschrift WO 2009/100762 A1 betrifft ein Lichtsteuergerät mit mindestens einer Kommunikationsschnittstelle, wobei die mindestens eine Kommunikationsschnittstelle für eine mindestens 2-polige Leitung ausgelegt ist und das Lichtsteuergerät diese 2- polige Leitung für die Datenkommunikation und/oder für seine Energieversorgung verwendet. Die Offenlegungsschrift DE 102006054785 A1 betrifft ein System zum Betreiben einer elektrischen Beleuchtungsvorrichtung, umfassend ein elektrisches Betriebsgerät zur Ansteuerung der Beleuchtungsvorrichtung sowie ein mit einem Bussystem koppelbares Schnittstellenmodul, welches ausgebildet ist, mittels des Bussystems übertragene, in einem ersten Protokoll organisierte Kommunikationssignale in das Betriebsgerät steuernde, in einem zweiten Protokoll organisierte Steuersignale umzuwandeln, wobei das Betriebsgerät ausgebildet ist, aus den Steuersignalen die Beleuchtungsvorrichtung steuernde Ansteuersignale abzuleiten, wobei das Schnittstellenmodul und das Betriebsgerät lösbar miteinander gekoppelt sind. In einer einfachen Ausgestaltung können die Schnittstellenelemente jeweils nur mit einem von zwei Bussystemen gekoppelt sein. In einer alternativen Ausgestaltung kann auch vorgesehen sein, dass die Schnittstellenmodule mit zwei Bussystemen koppelbar sind und die in den jeweiligen Protokollen organisierten Kommunikationssignale dieser Bussysteme in entsprechende, die Betriebsgeräte steuernde Steuersignale umzuwandeln können.

Der Erfindung liegt die Aufgabe zugrunde, ein herkömmliches Beleuchtungssystem so weiter zu bilden, dass aktuelle Beleuchtungsaufgaben besser und flexibler gelöst werden können. Die Erfindung schlägt hierzu vor, beim erfindungsgemäßen Beleuchtungssystem die Verwendung zumindest zweier Betriebsgeräte mit einer zweiten digitale, bidirektionale Steuerschnittstelle zum Anschluss an einen weiteren externen digitalen Steuerbus mit Adressierfunktionalität vorzusehen, wobei erste und zweite Steuerschnittstelle zum Betrieb mit unterschiedlichen Datenprotokollen ausgebildet sind. Damit wird ein erfindungsgemäßes Beleuchtungssystem mit hochfunktionalem Betriebsgerät bereitgestellt, dass sich insbesondere für komplexe Beleuchtungsaufgaben mit einer Vielzahl von in einem Beleuchtungssystem steuerseitig angeschlossenen Betriebsgeräten, Sensoren bzw. Datenendgeräten etc. eignet. Mit dem Betriebsgerät können flexibel derartige Beleuchtungsaufgaben gelöst werden und gleichzeitig aktuelle Standards, insbesondere den DALI-Standard nach IEC 62386 erfüllt bzw. es kann an herkömmliche Lichtmanagementsysteme angeschlossen werden, die auf dem besagten Standard basieren. Beim erfindungsgemäßen Beleuchtungssystem sind die zumindest zwei Betriebsgeräte über die jeweilige zweite Steuerschnittstelle über einen gemeinsamen zweiten digitalen Bus miteinander verbunden. Dabei umfasst das erfindungsgemäße Beleuchtungssystem ein Datenendgerät, das an den zweiten digitalen Steuerbus, insbesondere über eine drahtlose Kommunikationseinrichtung angeschlossen ist, wobei vom Datenendgerät über den zweiten Steuerbus Steuerinformation an das eine der zumindest zwei und als Master konfigurierte Betriebsgeräte übermittelt wird, in diesem intern die Steuerinformation an die erste digitale Schnittstelle übertragen wird, von welcher sie über den ersten digitalen Bus an ein weiteres, an den ersten digitalen Bus angeschlossenes Betriebsgerät zum Steuern des Speisens von dessen Leuchtmittel übermittelt wird.

Weitere erfindungsgemäße Merkmale bzw. Weiterbildungen der Erfindung sind in der allgemeinen Beschreibung, der Figurenbeschreibung, den Zeichnungen sowie den Unteransprüchen angegeben.

Vorzugsweise können die beiden digitalen, bidirektionalen Steuerschnittstellen eines Betriebsgeräts des erfindungsgemäßen Beleuchtungssystems als asynchrone und seriell arbeitende Steuerschnittstellen ausgebildet sein.

Es kann auch vorgesehen sein, an den zweiten digitalen Datenbus in ähnlicher Weise wie an den ersten digitalen Bus eine Vielzahl von Betriebsgeräten, Sensoren und Datenendgeräte anschließbar sind, wobei das Betriebsgerät zur Kommunikation mit derartigen Busteilnehmern auch über die zweite Steuerschnittstelle eingerichtet ist. Derartige Busteilnehmer können beispielsweise Leuchtmittel, Betriebsgeräte, Sensoren für Umgebungstemperatur, Bewegungsmelder, Lichtsensoren, Sensoren zur Erfassung der von einer Leuchte oder einem Beleuchtungssystem abgegebenen Lichtfarbe etc. sein. Es sei bemerkt, dass die Begriffe "Steuerbus" und "Datenbus" hier synonym verwendet werden.

Zweckmäßigerweise kann vorgesehen sein, dass die zweite digitale Steuerschnittstelle eine Übertragungsrate aufweist, die größer ist als die Übertragungsrate der ersten digitalen Steuerschnittstelle, insbesondere zumindest das 5-fache oder gar das 10-fache der Übertragungsrate der ersten digitalen Steuerschnittstelle beträgt. Durch diese gestalterische Maßnahme kann insbesondere erreicht werden, dass das Betriebsgerät an etablierte und aktuelle Lichtmanagementsysteme, insbesondere über eine DALI-Schnittstelle als erste digitale, bidirektionale Steuerschnittstelle angeschlossen sein kann, während über die zweite digitale Schnittstelle komplexe und/oder schnelle Steueraufgaben, wie eine Farbregelung innerhalb eines Beleuchtungssystems oder eine Leuchte unter Einbindung einer Mehrzahl von Betriebsgeräten realisiert werden können.

Um die Funktionalität des Betriebsgerätes weiter zu erhöhen kann vorgesehen sein, dass dieses eine Betriebszeitenerfassungseinrichtung, eine Leuchtmittelbetriebsparametererfassungseinrichtung, beispielsweise zur Erfassung des Leuchtmittelstroms oder des Energieverbrauchs des angeschlossenen Leuchtmittels, eine Einrichtung zur Erfassung der momentanen Leistungsaufnahme des Betriebsgerätes, der aktuellen Netzspannung, an welcher das Betriebsgerät zur Versorgung angeschlossen ist und/oder eine interne Temperaturerfassungseinrichtung aufweist. Zweckmäßigerweise kann das Betriebsgerät eine Datenverarbeitungseinrichtung umfassen zur Datenverarbeitung der erfassten Betriebsparameter und/oder Umgebungsparameter und einen Speicher zum Ablegen der erfassten und/oder datenverarbeiteten Parameter. Im Speicher des Betriebsgerätes können beispielsweise auch Daten zur Umsetzung einer CLO (Constant Light Operation) abgelegt sein, um beispielsweise abhängig von der Gesamtbetriebsdauer eines Leuchtmittels die Degradation des Leuchtmittels dadurch zu kompensieren, dass der Leuchtenstrom, beispielsweise ein LED-Betriebsstrom, zur Einstellung eines bestimmten Dimmpegels im Laufe der Lebenszeit des Leuchtmittel entsprechend seiner Degradation erhöht wird.

Da das Betriebsgerät zur Erfassung einer Vielzahl von externen und/oder internen Betriebsdaten ausgelegt sein kann, kann es bei Erfassung von Betriebsfehlern und/oder bei Überschreiten eines vorgegebenen Schwellwertes eines internen und/oder externen Betriebsparameters eine entsprechende Signalisierung über die erste und/oder die zweite digitale Schnittstelle abgeben oder zur Vermeidung einer Zerstörung einer Abschaltung des Betriebes durchführen oder veranlassen, wodurch beispielsweise ein thermischer Schutz für das Betriebsgerät bereitgestellt sein kann.

Da bei dem Betriebsgerät vorgesehen sein kann, eine Vielzahl von internen und/oder externen Betriebsparameter und hierzu datenverarbeitete Informationen in einem Speicher abzulegen, kann zweckmäßigerweise vorgesehen sein, dass das Betriebsgerät eingerichtet ist, dass diese Daten über die erste und/oder zweite Schnittstelle abgerufen werden, beispielsweise über ein Datenendgerät wie ein Smartphone oder ein Tablet, die an die erste Schnittstelle oder über den zweiten digitalen Bus an die zweite Schnittstelle mit dem Betriebsgerät verbunden sein können.

Zweckmäßigerweise kann die zweite digitale Steuerschnittstelle als anwenderseitig programmierbare Schnittstelle ausgebildet sein zur Bereitstellung eines anwenderspezifischen Befehlssatzes der Schnittstelle. Diese Programmierung kann insbesondere direkt über die zweite digitale Steuerschnittstelle durchgeführt werden. Es ist jedoch darüber hinaus auch möglich, die Programmierung der zweiten digitalen Schnittstelle über die erste digitale Steuerschnittstelle durchzuführen. Es kann vorgesehen sein, dass ein Basis-Befehlssatz in der zweiten digitalen Steuerschnittstelle zu deren Betrieb abgelegt ist, die Funktionen zur Programmierung und zum Monitoring von gespeicherten und/oder verarbeiteten Betriebsdaten umfassen. Ferner kann ein Speicherbereich innerhalb der zweiten digitalen Steuerschnittstelle vorgesehen sein um anwenderspezifischen Programmcode abzulegen.

Der Anwender kann durch derartige Ausgestaltungen in die Lage versetzt sein, eigene Komponenten mit dem Betriebsgerät über den zweiten digitalen Bus zu verbinden soweit die Schnittstellen dieser weiteren Komponenten entsprechend programmiert sind zum Anschließen an den zweiten digitalen Bus.

Zweckmäßigerweise kann die zweite Schnittstelle des Betriebsgerätes zum Anschließen an einen zweipoligen Bus ausgebildet sein wobei dieser Bus eine zweipolige Busversorgung aufweisen kann. Ferner kann vorgesehen sein, dass der Bus über eine Sicherheitskleinspannung (Safety Extra Low Voltage: SELV) Bus versorgt ist, die beispielsweise durch eine der an dem Bus angeschlossene Masterschnittstelle bereitgestellt werden kann. Insofern kann vorgesehen sein, dass ein Betriebsgerät in Bezug auf den zweiten digitalen Bus als Master konfiguriert werden kann.

Wie ober stehend schon erläutert kann die erste digitale Schnittstelle des Betriebsgerätes insbesondere zum Anschluss an einen DALI-Bus oder einen DSI-Bus ausgebildet sein, wobei ersterer in der Regel mit einer Übertragungsrate von 1200 Baud arbeitet. Dagegen kann die zweite digitale Steuerschnittstelle beispielsweise zum Anschluss an einen I²C-Bus (Inter-Integrated Circuit) ausgebildet sein, wobei dieser Bus beispielsweise zum Verbinden von mehreren Betriebsgeräten innerhalb einer Leuchte oder auch zum Verbinden von mehreren Leuchten innerhalb eines erfindungsgemäßen Beleuchtungssystems ausgebildet sein kann, und wobei wie beschrieben an diesem zweiten Bus eine Vielzahl von weiteren Komponenten wie Sensoren über entsprechende Schnittstellen angeschlossen sein können. In weiteren Ausführungsformen des Betriebsgerätes kann die besagte zweite digitale Steuerschnittstelle auch als RS 485-Schnittstelle oder als RS 232-Schnittstelle ausgebildet sein, welche alle Übertragungsraten aufweisen, die mehr als das 10-fache der Übertragungsrate eines DALI-Bus umfassen. Der Betrieb nach dem I²C-Standard erlaubt Übertragungsraten über mehrere Mbit/s.

Zweckmäßigerweise kann vorgesehen sein, dass das Betriebsgerät zwischen den beiden digitalen Schnittstellen zum internen bidirektionalen Datenaustausch ausgebildet ist, sodass beispielsweise Steuerinformationen und/oder Sensorinformationen von der einen Steuerschnittstelle an die andere intern übermittelbar ist.

Das Betriebsgerät kann so eingerichtet sein, Information von dem ersten Bus, an welchem das Betriebsgerät über die erste digitale Steuerschnittstelle angeschlossen ist auf den zweiten digitalen Bus an welchem das Betriebsgerät über die zweite digitale Steuerschnittstelle angeschlossen ist, zu übertragen, wobei in der Steuereinrichtung zuvor noch eine Veränderung oder Verarbeitung der Daten erfolgen kann. Informationen, insbesondere Steuerinformationen können durch diese Gestaltung von den Busteilnehmern des ersten digitalen Busses an Busteilnehmer des zweiten digitalen Busses übermittelt werden. In diesem Sinne kann das Betriebsgerät eine Gateway-Funktionalität bereitstellen, wobei darüber hinaus auch eine Verarbeitung der Steuerinformation in der Steuereinrichtung erfolgen kann, sodass die Steuer- oder Betriebsdaten auch gefiltert oder verändert zwischen den beiden Schnittstellen ausgetauscht werden können.

Insbesondere um eine Steuerung von Betriebsparametern wie einen Leuchtmittelstrom zum Betriebs eines an das betriebsgerät angeschlossenes Leuchtmittel sowohl über die erste als auch über die zweite Steuerschnittstelle bereitzustellen, kann vorgesehen sein, dass beide Steuerschnittstellen mit der Steuereinrichtung des Betriebsgerätes zum Austausch von Steuerinformation verbunden sind.

Die Steuereinrichtung des Betriebsgerätes kann ausgebildet sein bei der Erfassung von Fehlerfällen, kritischen Betriebszuständen des Betriebsgerätes oder des Leuchtmittels und/oder bei Erreichen einer vorgegebenen Lebensdauergrenze von Betriebsgeräten und/oder Leuchtmitteln eine Wartungsfunktion auszuführen, insbesondere durch Übermittlung einer zugeordneten Information über die erste und die zweite Schnittstelle oder über die zweite Schnittstelle, insbesondere an ein an die zweite Schnittstelle über den zweiten digitalen Bus angeschlossenes Datenendgerät. Wie oben stehend erläutert kann die zweite Schnittstelle des Betriebsgerätes, mit welchem dieses an dem zweiten Bus angeschlossen ist, zur Übermittlung von im Speicher abgelegter Betriebsinformation an ein Datenendgerät eingerichtet sein, welches selbst am zweiten Datenbus angeschlossen ist.

Das Betriebsgerät eignet sich in besonderer Weise zur Gestaltung eines erfindungsgemäßen Beleuchtungssystems, welches zumindest zwei derartiger Betriebsgeräte umfasst, die über die jeweilige zweite Steuerschnittstelle an einen gemeinsamen zweiten digitalen Bus und somit miteinander verbunden sind, wobei eines der zumindest zwei Betriebsgeräte über seine erste digitale Steuerschnittstelle, mit welcher es an den ersten externen Steuerbus angeschlossen ist, mit einer zentralen Steuereinrichtung verbunden sein kann.

Zweckmäßigerweise kann dabei vorgesehen sein, dass eines der Betriebsgeräte als Master des zweiten externen Bus agiert und durch entsprechendes Steuersignal über den zweiten digitalen Bus den Betrieb der an die anderen Betriebsgeräte angeschlossenen Leuchtmittel steuert. Ein wie beschrieben gestaltetes Beleuchtungssystem weist insbesondere bei zeitkritischen Beleuchtungsszenarien, beispielsweise bei Regelungen zwischen Betriebsgeräten, die über einen digitalen Bus miteinander verbunden sind, Vorteile gegenüber herkömmlichen Beleuchtungssystemen auf aufgrund der sehr viel höheren Übertragungsrate auf dem zweiten digitalen Bus bzw. über die zweiten digitalen Steuerschnittstellen. Beispielsweise kann mit einem solchen erfindungsgemäßen Beleuchtungssystem eine Farbsteuerung des vom System abgegebenen Lichtes realisiert werden, bei dem eine Mehrzahl von Betriebsgräten, die an dem zweiten digitalen Bus zusammen mit einem Farblichtsensor angeschlossen sind, wobei die Betriebsgeräte Leuchtmittel, beispielsweise LED-Einrichtungen, die Licht unterschiedlicher Farbtemperatur abgeben, speisen. Dabei kann eines der Betriebsgeräte als Master konfiguriert sein, der andere Betriebsgeräte zum Betrieb der jeweiligen Leuchtmittel ansteuert, wobei auf die Abgabe von Licht mit vorgegebener Farbtemperatur durch das Master-Betriebsgerät geregelt werden kann.

Zur Vermeidung von Netzstörungen auf das Leuchtmittel kann vorgesehen sein, zwischen Netzeingangsstufe und Ausgangsstufe eine Lastübertragungseinrichtung zur galvanischen Entkopplung anzuordnen. Diese kann beispielsweise als Trafosystem ausgebildet sein, deren Primärseite netzseitig und dessen Sekundärseite ausgangsstufenseitig angeordnet ist. Um eine besondere galvanische Trennung steuerseitig zwischen erster und zweiter digitaler Schnittstelle einzusparen, kann erfindungsgemäß darüber hinaus vorgesehen sein, die Verbindung zwischen erster und zweiter digitaler Schnittstelle über die Lastübertragungseinrichtung zu realisieren, insbesondere mittels primärseitig und sekundärseitig angeordneten Modulations- und zugeordneten Demodulationseinrichtungen.

Bei einem erfindungsgemäßen Beleuchtungssystem ist vorgesehen, dass zumindest einige der Betriebsgeräte jeweils über die zweite digitale Schnittstelle an einem gemeinsamen Bus, dem zweiten digitalen Bus angeschlossen sind.

Zur Darstellung bzw. zur weiteren Verarbeitung der innerhalb eines Betriebssystems gespeicherten Betriebsinformation ist vorgesehen, dass an einen gemeinsamen zweiten digitalen Steuerbus ein Datenendgerät angeschlossen ist, von welchem die in dem angeschlossenen Betriebsgeräten abgelegten Betriebsdaten abgerufen werden können. Dadurch, dass in einem Betriebsgerät die beiden digitalen Schnittstellen miteinander verbunden und zum internen bidirektionalen Datenaustausch ausgebildet sein können, kann vorgesehen sein, dass ein Datenendgerät, welches am zweiten digitalen Steuerbus angeschlossen ist, Steuerinformation an das eine der zumindest zwei und als Master konfigurierten Betriebsgerät übermittelt, wobei die Steuerinformation intern an die erste digitale Schnittstelle übertragen wird, von welcher sie über den ersten digitalen Bus an ein weiteres, an dem ersten digitalen Bus angeschlossenes Betriebsgerät zum Steuern des Betriebs von dessen Leuchtmittel übermittelt. In ähnlicher Weise kann bei Umkehrung des Informationsflusses vorgesehen sein, dass über die erste Schnittstelle an ein Betriebsgerät eine Steuer- oder Dateninformation übermittelt wird, die über die zweite Schnittstelle ausgegeben und über den zweiten digitalen Bus an ein anderes Betriebsgerät zum Steuern des Betriebes von dessen Leuchtmittel übermittelt wird.

Es versteht sich, dass der beschriebene Austausch von Information zwischen den beiden Bussen nicht nur Steuerinformation umfassen kann, sondern beliebige Information, beispielsweise Sensorinformation oder Betriebsinformation.

Zur Bereitstellung einer zentralen Energie- bzw. Leistungsmessung innerhalb des erfindungsgemäßen Beleuchtungssystems kann vorgesehen sein, dass die zumindest zwei Betriebsgeräte versorgungsseitig über eine Energie- bzw. Leistungsmesseinrichtung an ein Versorgungsnetz angeschlossen sind, wobei diese Messeinrichtungen eine Schnittstelle zum Anschließen an den gemeinsamen zweiten digitalen Steuerbus aufweist zur Übertragung von elektrischen Verbrauchswerten, insbesondere an einen bezüglich des zweiten digitalen Steuerbus konfigurierten Master.

Aus energietechnischen Erwägungen kann zweckmäßigerweise vorgesehen sein, dass die angegebene Energie- bzw. Leistungsmesseinrichtung einen Versorgungsausgang aufweist, an welchem über den gemeinsamen zweiten digitalen Bus ein als Master konfiguriertes Betriebsgerät angeschlossen ist, wobei das Beleuchtungssystem eine steuerbare Schalteinrichtung, welche insbesondere in der Messeinrichtung integriert sein kann, aufweist, die eingangsseitig mit dem Netz und ausgangsseitig mit den jeweiligen Netzstufen der anderen Betriebsgeräte verbunden ist. Insofern kann bei Bedarf, insbesondere bei komplexen Beleuchtungssystemen zumindest ein Teil der Betriebsgeräte stillgelegt werden, wenn beispielsweise von einem zentralen Steuermanagement über den ersten digitalen Steuerbus ein Standby-Befehl übermittelt wird, sodass beispielsweise allein das für den zweiten digitalen Bus konfigurierte Master-Betriebsgerät in den Standby-Modus versetzt werden kann und die anderen Betriebsgeräte ausgeschaltet werden können.

Die Erfindung wird im Folgenden durch das Beschreiben einiger Ausführungsformen unter Bezugnahme auf die beiliegenden Zeichnungen erläutert, wobei
Figur 1 in einer Prinzipdarstellung eine erste Ausführungsform eines Betriebsgerätes,
Figur 2 eine zweite Ausführungsform eines Betriebsgerätes in einer Prinzipdarstellung,
Figur 3 eine dritte Ausführungsform eines Betriebsgerätes in einer Prinzipskizze,
Figur 4 ein erfindungsgemäßes Beleuchtungssystem unter Verwendung mehrerer Betriebsgeräte in einer Leuchte in einer Prinzipskizze,
Figur 5 ein erfindungsgemäßes Beleuchtungssystem unter Verwendung eines Betriebsgerätes in einer Prinzipskizze und
Figur 6 eine weitere Ausführungsform eines erfindungsgemäß gestalteten Beleuchtungssystems in einer Prinzipskizze zeigt.

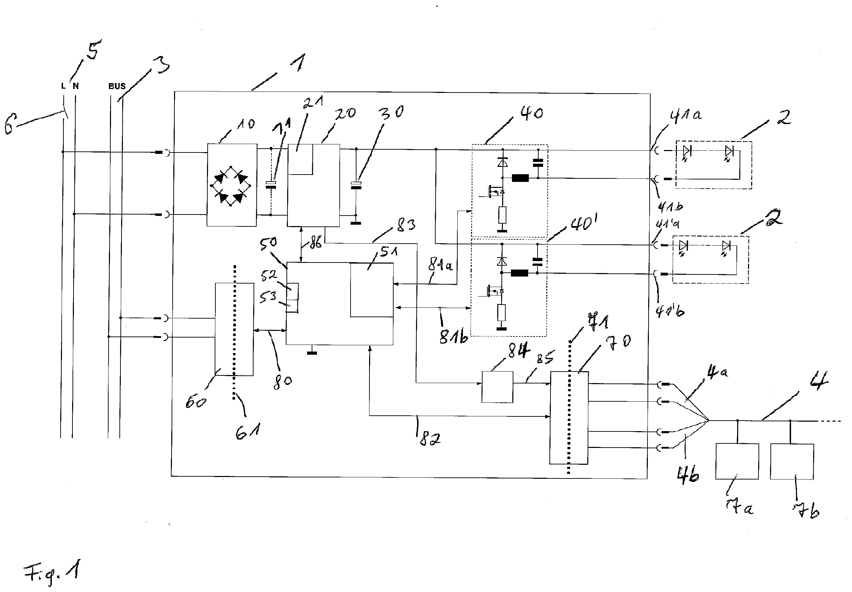

Figur 1 stellt den Betrieb eines Betriebsgerätes zum Speisen von zwei LED-Einrichtungen 2 dar (Die in Figur 1 gezeigte Ausführungsform fällt nicht unter den unabhängigen Anspruch). Das Betriebsgerät 1 weist eingangsseitig Anschlüsse zum Anschließen an ein Versorgungsnetz 5 auf, die mit einem Gleichrichter 10 verbunden sind, welcher in der beschriebenen Ausführungsform darüber hinaus einen Netzfilter aufweist. Ausgangsseitig ist ein optionaler Zwischenkreiskondensator 11 angeschlossen, welcher den Eingang für eine erste Wandlerstufe 20 darstellt, die hier als AC/DC Wandler ausgebildet ist. Zur Erfassung der aufgenommen elektrischen Leistung weist die erste Wandlerstufe 20 eine Leistungsmessungseinrichtung 21 auf. Der ersten Wandlerstufe ist ausgangseitig ein Zwischenkreiskondensator 30 zugeordnet, der die zweiten Wandlerstufen 40, 40' speist, welche als Ausgangsstufen mit Ausgangsanschlüssen 41a, 41b; 41'a, 41'b, die dort angeschlossenen LED-Einrichtungen 2 speisen. In den Ausgangsstufen 40, 40' wir der LED-Strom geregelt. Die Ausgangsstufen 40, 40' sind herkömmlich aufgebaut, beispielsweise als getaktete Wandler wie dargestellt, sodass sie einen hohen elektrischen Wirkungsgrad aufweisen.

Die Steuerung der ersten Wandlerstufe 20 sowie der beiden Ausgangsstufen 40, 40a erfolgt durch eine Steuereinrichtung 50, die ein spezielles Steuerteil 51 zur Steuerung der beiden Ausgangsstufen in der beschriebenen Ausführungsform umfasst. Für die beschriebenen Steuerung ist die Steuereinrichtung 50 über bidirektionale Leitungen 86 mit der ersten Wandlerstufe verbunden wobei von dieser Daten der Leistungsmesseinrichtung an die Steuereinrichtung übermittelbar sind. Die Steuerung der Ausgangsstufen 40, 40' erfolgt über die angegebene Verbindung 81a, 81b, wobei über diese auch Signale von den Ausgangsstufen an die Steuereinrichtung 50 übermittelt werden, hier Messsignale bezüglich des jeweiligen Laststroms durch die beiden LED-Einrichtungen. In Figur 1 ist in den Schaltungen hierzu ein Messwiderstand angegeben.

Das Betriebsgerät weist darüber hinaus eine herkömmliche DALI-Schnittstelle 60 auf, mit welcher das Betriebsgerät 1 an einen externen DALI-Bus 3 angeschlossen ist. In der Figur angedeutet ist eine galvanische Entkopplung 61, die beispielsweise über Optokoppler realisiert sein kann. Die DALI-Schnittstelle 60 ist über Kommunikationsverbindungen 80 mit der Steuereinrichtung 50 verbunden und damit zum Empfang von Steuer- und dateninformation über den Bus 3, beispielsweise von einer zentralen Lichtmanagementeinrichtung.

Das Betriebsgerät 1 weist darüber hinaus eine zweite digitale Schnittstelle 70 auf, die in der beschriebenen Ausführungsform als I²C-Schnittstelle ausgebildet ist und hier Übertragungsgeschwindigkeiten bis zu einigen Mbit/s bidirektional unterstützt. Auch die I²C-Schnittstelle weist eine galvanische Entkopplung 71 auf und ist in der beschriebenen Ausführungsform als Masterschnittstelle ausgebildet zur Versorgung des externen I²C-Bus 4. Dieser umfasst einen Datenbusteil 4b, der zweipolig aufgebaut ist, sowie einen zweipoligen Versorgungsteil 4a, der in der Ausführungsform der Figur 1 des Betriebsgerätes von diesem versorgt wird. Hierzu ist die Schnittstelle 70 über eine Spannungsanpassung 84 und Leitungen 85, 83 an die erste Wandlereinrichtung 20 angeschlossen, sodass am Bus 4 die notwendige Betriebsspannung zur Versorgung aller anderen an den Bus angeschlossenen Schnittstelleneinrichtungen anliegt. In der Figur sind weitere I²C-Busteilnehmer 7a, b dargestellt.

Die I²C-Schnittstelle 70 ist intern über bidirektionale Kommunikationsverbindungen 82 mit der Steuereinrichtung 50 verbunden, sodass eine interne Gateway-Funktionalität zwischen der DALI-Schnittstelle 60 und der I²C-Schnittstelle 70 realisiert werden kann. Wie der Fachmann erkennt, ist es grundsätzlich möglich, dass das Betriebsgerät 1 der Figur 1 sowohl als Master für den zum Betriebsgerät 1 externen Bus 4 als auch als Master für den zum Betriebsgerät externen Bus 3 ausgebildet bzw. konfiguriert sein kann. In ähnlicher Weise kann das Betriebsgerät 1 der Figur 1 sowohl in Bezug auf die DALI-Schnittstelle als auch auf die I²C-Schnittstelle als Slave konfiguriert bzw. ausgebildet sein, oder nur wie in Figur 1 angegeben als Master für den I²C-Bus 4.

An dem zweiten digitalen Bus 4 können prinzipiell wie an dem DALI-Bus 3 lichttechnische Einrichtungen über entsprechende Schnittstellen angeschlossen werden, insbesondere auch Datenendgeräte, unter Umständen über ein Kommunikationsmodul mit Luftschnittstelle, wobei Information, insbesondere Steuerinformation, zwischen beiden digitalen Schnittstellen bzw. Busse je nach Konfiguration beliebig übertragen werden kann, sodass das Betriebsgerät 1 hochfunktional und flexibel auf beliebige Anforderungen konfiguriert werden kann. Beispielsweise kann die I²C-Schnittstelle 70 programmierbar ausgebildet sein, sodass der Nutzer eigene Befehlssätze definieren kann zum Einbinden weiterer Busteilnehmer und mit dem Betriebsgerät 1 eine flexiblere Konfiguration allgemeiner Managementsysteme ermöglicht wird. In der beschriebenen Ausführungsform ist die Schnittstelle 70 als Open API (Application Programming Interface) ausgebildet.

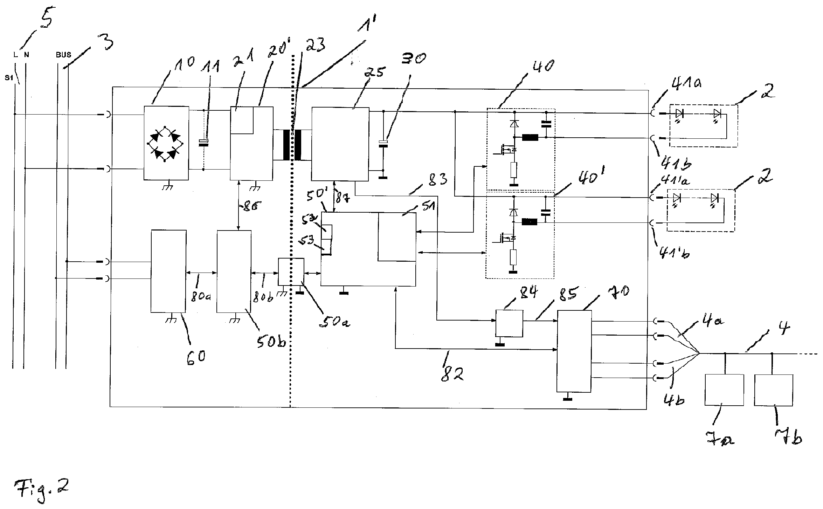

Figur 2 zeigt ein weiteres Betriebsgerät 1', wiederum in einer Prinzipdarstellung, das in Bezug auf viele Einrichtungen gleich zu dem Betriebsgerät gemäß Figur 1 aufgebaut ist(Die in Figur 2 gezeigte Ausführungsform fällt nicht unter den unabhängigen Anspruch).

Ein wesentlicher Unterschied zwischen dem Betriebsgeräten 1, 1' besteht in der galvanischen Entkopplung des Netzes und der LED-Einrichtungen, das heißt im Leistungsbereich als auch in einer galvanischen Entkopplung im Steuerbereich des Betriebsgerätes. Im Wesentlichen gleich wirkende Bauteile in Bezug auf die Ausführungsform gemäß Figur 1 sind in der Darstellung des Betriebsgerätes 1' der Figur 2 mit identischen Bezugszeichen versehen. Die erste Wandlerstufe 20' ist hier als AC/AC Wandler ausgebildet, die ausgangsseitig ein Trafosystem 23 speist, das zur galvanischen Entkopplung des Leistungsstranges vorgesehen ist. Sekundärseitig ist ein steuerbarer AC/DC Wandler 25 vorgesehen, der wiederum die Zwischenkreisspannung am Kondensator 30 für die nachfolgenden Ausgangsstufen 40, 40a bereitstellt.

Die Steuereinrichtung des Betriebsgerätes 1 gemäß Figur 2 umfasst aufgrund der galvanischen Entkopplung der Steuerseite in der beschriebenen Ausführungsform drei Bestandteile: das Steuerteil 50', welches im Wesentlichen die Funktionalitäten der Steuereinrichtung 50 des Betriebsgerätes 1 der Figur 1 umfasst, darüber hinaus die Steuerentkopplung 50a, beispielsweise in Form von Optokopplern und das Steuerteil 50b, welches die erste Wandlerstufe 20' steuert über die Verbindung 86. Darüber hinaus werden über die Verbindung 86 von der Wandlerstufe Messdaten der Leistungsmesseinrichtung 21 über das Steuerteil 50b, die Steuerentkopplung 50a zum Steuerteil 50' übermittelt.

Wie aus der Figur 2 ersichtlich ist auch in der Ausführungsform gemäß Figur 2 eine Gatewayfunktionalität zwischen der DALI-Schnittstelle 3 und der I²C-Schnittstelle 70 bidirektional realisiert, sodass sich die Funktionalität des Betriebsgerätes gemäß Figur 2 nicht von der gemäß Figur 1 unterscheidet mit Ausnahme, dass eine geringere Störanfälligkeit aufgrund der Entkopplung von Versorgungsnetz und LED-Last realisiert ist. Da auf der Steuerseite die Entkopplung zentral durch die Steuerentkopplung 50a bereitgestellt ist, können unter Umständen die mit Bezug auf Figur 1 beschriebenen Entkopplungen 61, 71 in den digitalen Schnittstellen entfallen.

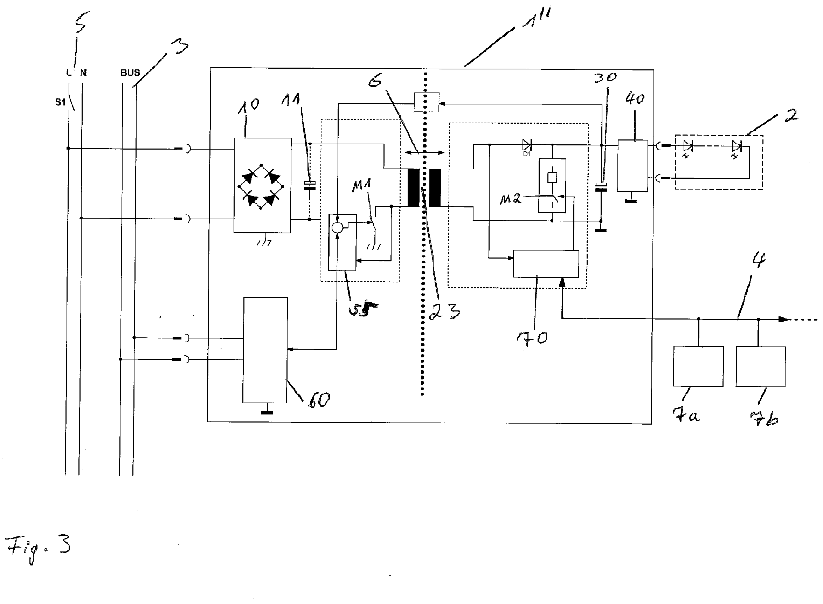

Figur 3 zeigt eine dritte Ausführungsform eines Betriebsgerätes, welches wiederum eine DALI-Schnittstelle 60 und als zweite digitale Schnittstelle eine I²C-Schnittstelle 70 aufweist, wobei die Gatewayfunktionalität zwischen beiden Schnittstellen über das mit Bezug auf die Ausführungsform gemäß Figur 2 beschriebenen Trafosystem 23 realisiert ist, und wobei diese Gatewayfunktionalität bidirektional eingerichtet ist (Die in Figur 3 gezeigte Ausführungsform fällt nicht unter den unabhängigen Anspruch). In der Darstellung der Figur 3 sind sekundärseitig und primärseitig zum Trafosystem 23 allein die Modulationsmittel in Form von steuerbaren Schaltern M1, M2 angegeben, jedoch zur Vereinfachung der Darstellung nicht die entsprechenden Erfassungseinrichtungen, beispielsweise in Form eines Peak-Detektors auf der Sekundärseite für die von der DALI-Schnittstelle 60 zur I²C-Schnittstelle 70 übermittelten Information. Der Modulationsschalter M1 wird von der Steuereinrichtung 55 in Abhängigkeit der zu übertragenden Daten der DALI-Schnittstelle und in Abhängigkeit der Zwischenkreisspannung am Zwischenkreiskondensator 30 anliegenden Spannung so gesteuert, dass zum einen die Daten sekundärseitig erfasst werden können und zum anderen eine vorgegebenen Zwischenkreisspannung am Kondensator 30 zur Speisung der Ausgangsstufe 40 aufrecht erhalten werden kann. In Umkehrrichtung moduliert in der beschriebenen Ausführungsform die digitale Schnittstelle 70 den sekundärseitigen Lastkreis, sodass resultierende Fluktuationen primärseitig zum Trafosystem 23 in nicht dargestellte Weise von der Steuereinrichtung 55 erfasst werden können zur Übermittlung von Informationen ausgehend von der I²C-Schnittstelle 70 auf die DALI-Schnittstelle 60 über das Trafosystem 23. Die beschriebene Gatewayfunktionalität zwischen beiden Schnittstellen ist in Figur 3 durch den Doppelpfeil G dargestellt.

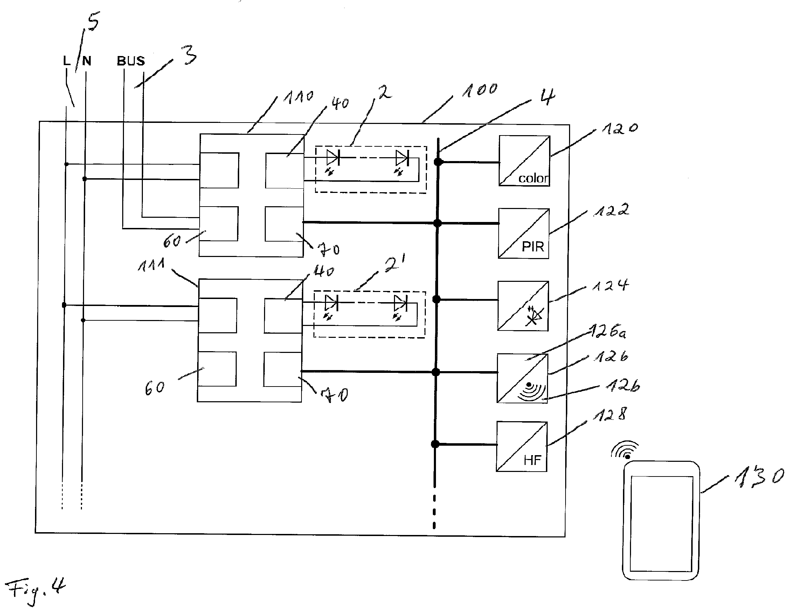

Figur 4 zeigt ein erfindungsgemäßes Beleuchtungssystem in Form einer Leuchte 100 umfassend zwei Betriebsgeräte in einer der oben stehend beschriebenen Ausführungsformen, insbesondere der in Figur 1 angegebenen. Die Leuchte weist zwei Betriebsgeräte 110, 111 auf, die grundsätzlich identisch aufgebaut sind und sowohl eine DALI-Schnittstelle 60 als auch eine I²C-Schnittstelle 70 aufweisen. Sie umfassen jeweils eine Ausgangsstufe 40 zum Speisen einer LED-Einrichtung 2, 2', wobei hier die erstgenannte LED-Einrichtung Licht mit einer Farbtemperatur von 2700K und die zweite LED-Einrichtung 2' Licht emittiert mit einer Farbtemperatur von 6500K, sodass in bekannter Art das von der Leuchte abgestrahlte Licht in Bezug auf die sogenannte Correlated Colour Temperature (CCR) Farbtemperatur des Lichtes variabel eingestellt werden kann. Derartige Leuchten werden auf dem Gebiet als "Tunable White"-Leuchten bezeichnet.

Beide Betriebsgeräte sind an das Netz 5 angeschlossen, wobei das Betriebsgerät 110 von einer nicht dargestellten zentralen Lichtmanagementeinrichtung über den DALI-Bus 3 entsprechende Steuersignale zum Steuern bzw. Regeln der Farbtemperatur erhält. Beide Betriebsgeräte 110, 111 sind über ihre beiden zweiten digitalen Schnittstellen 70 an den gemeinsamen I²C-Bus 4 angeschlossen, wobei in der beschriebenen Ausführungsform das Betriebsgerät 110 respektive dessen Schnittstelle 70 als Master für den digitalen I²C-Bus agiert. In einer nicht dargestellten Ausführungsform kann eine solche Leuchte weitere Betriebsgeräte, beispielsweise insgesamt vier umfassen, sodass für eine entsprechende Farbeinstellung vier bezüglich ihrer Farbtemperatur unterschiedliche LED-Einrichtungen einsetzbar sind.

Wie aus Figur 4 ersichtlich, sind in der Leuchte eine Mehrzahl von Sensoren umfasst, bzw. an den zu den Betriebsgeräten 110, 111 externen, gemeinsamen digitalen Bus 4 angeschlossen, namentlich einen Farbsensor 120, einen Passivinfrarot-Bewegungsmelder 122, ein Lichtsensor 124, eine Kommunikationseinrichtung 126 sowie einen weiteren, hier HF-Bewegungsmelder 128. Alle angeschlossenen Einrichtungen weisen zum einen eine entsprechende I²C-Schnittstelle zum Anschließen an den Bus 4 sowie die eigentliche Funktionsbaugruppe auf. Beispielsweise umfasst die Kommunikationseinrichtung 126 eine I²C-Schnittstelle 126a sowie eine Bluetooth-Schnittstelle 126b zur Kommunikation mit einem Tablet 130 auf, das wiederum eine Bluetooth-Schnittstelle zur Kommunikation mit der Kommunikationseinrichtung 126 umfasst. Über das Tablet können beispielsweise Betriebsparameter der Leuchte abgerufen oder eingestellt werden, darüber hinaus ist es auch möglich, über die beschriebene Gatewayfunktionalität eines Betriebsgerätes Information oder Steuerdaten über den DALI-Bus 3 zu übermitteln oder entsprechende Daten über diesen anzufordern. Die Leuchte in der Art gemäß Figur 4 kann besonders wirkungsvoll zur Steuerung der Farbtemperatur der Leuchte eingesetzt werden, was insbesondere bei einem Laufband mit einer Mehrzahl von LED-Einrichtungen unterschiedlicher Farbtemperatur besonderes effektiv ist, da aufgrund der hohen Übertragungsrate des Busses 4 eine effektive Regelung der aktuellen Farbtemperatur der Gesamtleuchte über den I²C-Bus möglich ist. Diese Regelung erfolgt in der beschriebenen Ausführungsform im Betriebsgerät 110, das über den Bus 4 entsprechende Steuerinformation an das Betriebsgerät 111 übermittelt und aktuelle Sensorsignale des Farbsensors 120 anfordert.

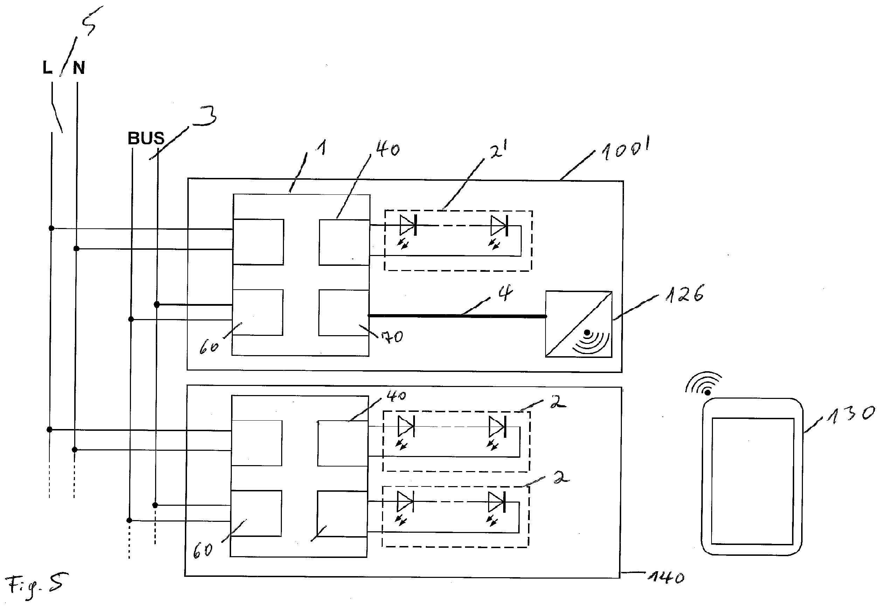

Eine weitere Ausführungsform eines erfindungsgemäßen Leuchtensystems zeigt Figur 5 (Die in Figur 5 gezeigte Ausführungsform fällt nicht unter den unabhängigen Anspruch). Das System umfasst ein Betriebsgerät 1 in einer Leuchte 100', wobei eine einzelne Ausgangsstufe 40 eine LED-Einrichtung 2' speist. An den Ausgang der digitalen Schnittstelle 70 ist wie im vorhergehenden Beispiel eine Kommunikationseinrichtung 126 angeschlossen, zur Kommunikation mit einem Tablet über den Bluetooth-Standard. Das Betriebsgerät 1 ist darüber hinaus über seine DALI-Schnittstelle 60 an den externen DALI-Bus 3 angeschlossen. Das System umfasst ferner eine herkömmliche Leuchte 140 die zweikanalig aufgebaut ist, d.h. zwei Ausgangsstufen 40 umfasst zum unabhängigen Speisen von zwei LED-Einrichtungen 2. Im Beleuchtungssystem gemäß Figur 5 ist das Betriebsgerät 1 in Bezug auf den DALI-Bus 3 als Master ausgebildet, sodass beispielsweise vom Tablet 130 über die I²C-Schnittstelle 70 und die beschriebene Kommunikationsverbindung zwischen den beiden Schnittstellen 70, 60 auf den DALI-Bus 7 und damit auf die DALI-Schnittstelle 60 der Leuchte 140 zugegriffen werden kann, sodass über den beschriebenen Weg auch die Leuchte 140 mittels des Tablets 130 konfiguriert, gesteuert oder von dieser Daten abgefragt werden können.

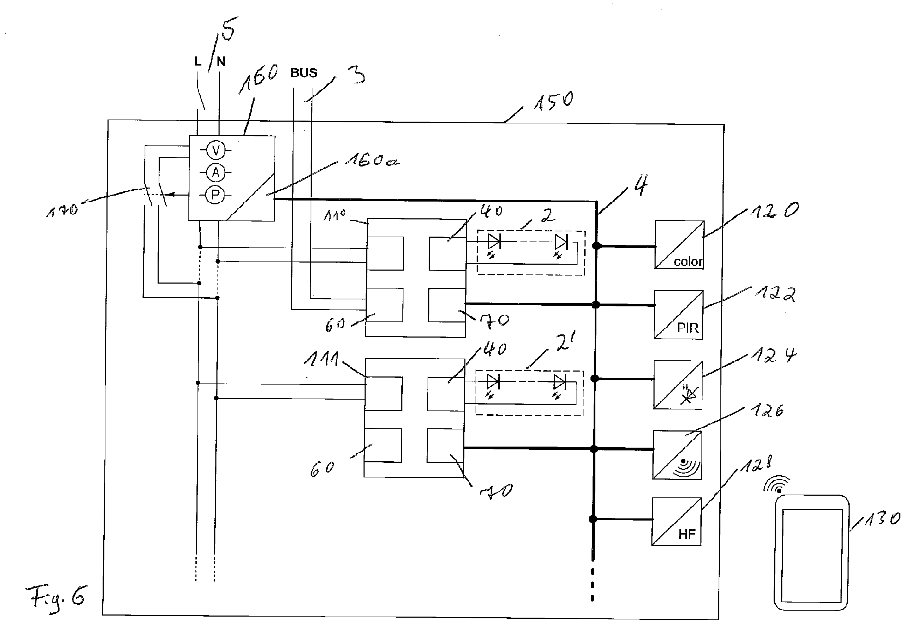

Figur 6 zeigt ein weiteres erfindungsgemäßes Beleuchtungssystem in Form einer Leuchte 150, die ähnlich wie die Leuchte 100 gemäß Figur 4 aufgebaut ist. Der einzige Unterscheid besteht darin, dass netzeingangsseitig eine Leistungsmesseinrichtung 160 vorgesehen ist zur Erfassung der von der Leuchte verbrauchten elektrischen Leistung. Die Leistungsmesseinrichtung 160 weist eine I²C-Schnittstelle 160a auf, mit welcher die Einrichtung 160 an den digitalen Bus 4 angeschlossen ist sodass entsprechende Leistungswerte vom Master 110 abgerufen werden und beispielsweise an das Tablet 130 übermittelt werden können.

In der in Figur 6 angegebenen Ausführungsform steuert die Leistungsmesseinrichtung 160 ein optionales Relais 170, beispielsweise um im Standby die weiteren Betriebsgeräte aus Energiesparerwägungen abzuschalten. In einer nicht dargestellten Ausführungsform kann das Relais über eine entsprechende Schnittstelle am I²C-Bus angeschlossen sein und insofern vom Master-Betriebsgerät 110 zum Ein- bzw. Ausschalten von Betriebsgeräten gesteuert werden.

### Bezugszeichenliste

- 1, 1', 12': Betriebsgerät
- 2, 2': LED-Einrichtung
- 3: DALI-Bus
- 4: I²C-Bus
- 4a: Versorgungsteil
- 4b: Datenbusteil
- 5: Versorgungsnetz
- 6: Schalter
- 7a, b: I²C-Busteilnehmer
- 10: Gleichrichter
- 11: Zwischenkreiskondensator
- 20, 20': Erste Wandlerstufe
- 21: Leistungsmesseinrichtung
- 23: Trafosystem
- 25: AC/DC-Wandler
- 30: Zwischenkreiskondensator
- 40, 40': Ausgangsstufe
- 41a, b: Ausgangsanschluss
- 41'a, b: Ausgangsanschluss
- 50: Steuereinrichtung
- 50': Steuerteil
- 50b: Steuerteil
- 50a: Entkopplungseinrichtung
- 51: Steuerteil
- 52: Temperatursensor
- 53: Speicher
- 55: Steuereinrichtung
- 60: DALI-Schnittstelle
- 61: Galvanischen Entkopplung
- 70: I²C-Schnittstelle
- 71: Galvanische Entkopplung
- 80: Kommunikationsverbindung
- 80a, b: Kommunikationsverbindung
- 81a, b: Kommunikationsverbindung
- 82: Kommunikationsverbindung
- 83: Versorgungsleitung
- 84: Spannungsanpassung
- 85: Versorgungsleitung
- 100, 100': Leuchte
- 110, 111: Betriebsgerät
- 120: Farbsensor
- 122: Bewegungssensor
- 124: Lichtsensor
- 126: Kommunikationseinrichtung
- 126a: I²C-Schnittstelle
- 126b: Bluethooth-Schnittstelle
- 128: Bewegungsmelder
- 130: Tablet
- 140: Leuchte
- 150: Leuchte
- 160: Leistungsmesseinrichtung
- 160a: I²C-Schnittstelle
- 170: Relais
- M1, M2: Modulationsschalter
- G: Gateway

## Patentansprüche

1. Beleuchtungssystem umfassend zumindest zwei Betriebsgeräte (1, 1', 1", 110, 111) zum Betreiben zumindest eines Leuchtmittels jeweils umfassend eine Netzeingangsstufe sowie zumindest eine mit der Netzeingangsstufe verbundene Ausgangsstufe (40, 40') mit Ausgangsanschlüssen (41a, b; 41'a, b) zum Verbinden mit dem Leuchtmittel, eine Steuereinrichtung (50,50', 55) zum Steuern der Ausgangsstufe bzw. des Betriebs des zumindest einen Leuchtmittels sowie eine erste digitale, bidirektionale Steuerschnittstelle (60) zum Anschließen an einen ersten externen digitalen Steuerbus (3) mit Adressierfunktionalität zum Empfangen von externer Steuerinformation, insbesondere eine DALI-(Digital Addressable Lighting Interface)-Schnittstelle (60), und eine zweite digitale, bidirektionale Steuerschnittstelle (70) zum Anschluss an einen zweiten externen digitalen Steuerbus (4) mit Adressierfunktionalität, wobei die erste und die zweite Steuerschnittstelle zum Betrieb mit unterschiedlichen Datenprotokollen ausgebildet sind, wobei die zumindest zwei Betriebsgeräte über die jeweilige zweite Steuerschnittstelle (70) über den zweiten digitalen Steuerbus (4) miteinander verbunden sind und wobei das Beleuchtungssystem ein Datenendgerät umfasst, das an den zweiten digitalen Steuerbus (4), insbesondere über eine drahtlose Kommunikationseinrichtung angeschlossen ist, wobei das Datenendgerät dazu ausgebildet ist, über den zweiten digitalen Steuerbus (4) Steuerinformation an ein erstes von den zumindest zwei Betriebsgeräten zu übermitteln, wobei das erste Betriebsgerät (110) als Master konfiguriert ist und dazu ausgebildet ist, die Steuerinformation intern an die erste digitale Schnittstelle (60) zu übertragen und von dieser über den ersten digitalen Steuerbus (3) an ein weiteres von den zumindest zwei Betriebsgeräten (1, 1', 1", 110, 111) zum Steuern des Speisens von dessen Leuchtmittel zu übermitteln.

2. Beleuchtungssystem nach Anspruch 1, **dadurch gekennzeichnet, dass** die jeweilige zweite digitale Steuerschnittstelle eine Übertragungsrate aufweist, die größer ist als die Übertragungsrate der ersten digitalen Steuerschnittstelle, insbesondere zumindest das Fünffache oder zumindest das Zehnfache der Übertragungsrate der ersten digitalen Steuerschnittstelle beträgt.

3. Beleuchtungssystem nach Anspruch 1 oder 2, **dadurch gekennzeichnet, dass** die zumindest zwei Betriebsgeräte jeweils eine Betriebszeitenerfassungseinrichtung, eine Leuchtmittelbetriebsparametererfassungseinrichtung und/oder eine interne Temperaturerfassungseinrichtung (52) sowie eine Datenverarbeitungseinrichtung zur Datenverarbeitung der erfassten Betriebsparameter und einen Speicher (53) zum Ablegen der erfassten und/oder datenverarbeiteten Betriebsparameter aufweisen.

4. Beleuchtungssystem nach Anspruch 1, 2 oder 3, **dadurch gekennzeichnet, dass** die jeweilige zweite digitale Steuerschnittstelle (70) als anwenderseitig programmierbare Schnittstelle ausgebildet ist zur Bereitstellung eines anwenderspezifischen Befehlssatzes der Schnittstelle.

5. Beleuchtungssystem nach einem der Ansprüche 1 bis 4, **dadurch gekennzeichnet, dass** das jeweilige Betriebsgerät zum internen bidirektionalen Datenaustausch zwischen den beiden Steuerschnittstellen ausgebildet ist.

6. Beleuchtungssystem nach einem der Ansprüche 1 bis 5, **dadurch gekennzeichnet, dass** beide Schnittstellen (60, 70) des jeweiligen Betriebsgeräts mit der Steuereinrichtung (50, 50', 55) verbunden sind, sodass die Steuerung von Betriebsparametern zum Betrieb eines an das Betriebsgerät angeschlossenen Leuchtmittels sowohl über die erste als auch über die zweite Steuerschnittstelle (60, 70) erfolgen kann.

7. Beleuchtungssystem nach einem der Ansprüche 1 bis 6, **dadurch gekennzeichnet, dass** die jeweilige Steuereinrichtung (50, 50', 55) ausgebildet ist, bei Erfassung von Fehlerfällen, kritischen Betriebszuständen des Betriebsgeräts oder des Leuchtmittels und/oder bei Erreichen einer Lebensdauergrenze von Betriebsgeräten und/oder Leuchtmitteln eine Wartungsfunktion auszuführen insbesondere durch Übermittlung einer zugeordneten Information über die erste und die zweite Schnittstelle (60, 70) oder über die zweite Schnittstelle (70), insbesondere an ein an die zweite Schnittstelle angeschlossenes Datenendgerät.

8. Beleuchtungssystem nach einem der Ansprüche 1 bis 7, **dadur chgekennzeichnet**, **dass** zwischen Netzeingangsstufe und Ausgangsstufe (40, 40') des jeweiligen Betriebsgerätes zur galvanischen Entkopplung eine Lastübertragungseinrichtung angeordnet ist, über welche die interne Verbindung zwischen erster und zweiter digitaler Schnittstelle (60, 70) verläuft.

9. Beleuchtungssystem nach einem der Ansprüche 1 - 8, **dadur chgekennzeichnet**, **dass** eines der zumindest zwei Betriebsgeräte (110, 111) über seine erste Steuerschnittstelle (60) über den ersten digitalen Steuerbus (3) an eine zentrale Steuereinrichtung des Beleuchtungssystems angeschlossen ist und dass das eine (110) der zumindest zwei Betriebsgeräte dazu ausgebildet ist, als Master über den zweiten digitalen Steuerbus (4) den Betrieb der an die anderen Betriebsgeräte (111) angeschlossenen Leuchtmittel zu steuern.

10. Beleuchtungssystem nach Anspruch 9, **dadurch gekennzeichnet, dass** an den zweiten digitalen Steuerbus (4) eine Farbsensoreinrichtung (120) des Beleuchtungssystems angeschlossen ist zur Erfassung einer spektralen Eigenschaft des vom Beleuchtungssystem abgegebenen Lichtes, wobei das eine der zumindest zwei Betriebsgeräte (110, 111) dazu ausgebildet ist, als Master über den zweiten digitalen Steuerbus (4) das Sensorsignal der Farbsensoreinrichtung abzufragen und abhängig vom Sensorsignal das Speisen des eigenen Leuchtmittels und das andere der zumindest zwei Betriebsgeräte (110, 111) über den zweiten digitalen Steuerbus (4) zum Speisen von dessen Leuchtmittel derart zu steuern, dass die Farbtemperatur des vom Beleuchtungssystem abgegebenen Lichtes auf eine vorgegebene Farbtemperatur geregelt ist.

11. Beleuchtungssystem nach einem der Ansprüche 1 bis 10, **dadurch gekennzeichnet, dass** die zumindest zwei Betriebsgeräte (110, 111) versorgungsseitig über eine Energie- bzw. Leistungsmesseinrichtung (160) des Beleuchtungssystems an ein Versorgungsnetz (5) angeschlossen sind, wobei die Energie- bzw. Leistungsmesseinrichtung (160) eine Busschnittstelle (160a) aufweist, mit welcher die Energie- bzw. Leistungsmesseinrichtung (160) an den zweiten digitalen Steuerbus (4) zur Übertragung von elektrischen Verbrauchswerten angeschlossen ist.

12. Beleuchtungssystem nach Anspruch 9 und 11, **dadurch gekennzeichnet, dass** die Energie- bzw. Leistungsmesseinrichtung (160) einen Versorgungsausgang aufweist, an welchem das als Master konfigurierte Betriebsgerät (1, 1', 1", 110, 111) angeschlossen ist sowie das Beleuchtungssystem eine steuerbare Schalteinrichtung aufweist, insbesondere eine Relaiseinrichtung (170), die eingangsseitig mit dem Netz (5) und ausgangsseitig mit der jeweiligen Netzstufe der anderen Betriebsgeräte (1, 1', 1", 110, 111) verbunden ist.

## Claims

1. Lighting system comprising at least two operating devices (1, 1' 1", 110, 111) for operating at least one light source respectively comprising one power input stage as well as at least one output stage (40, 40'), connected to the power input stage, with output connectors (41a, b ; 41'a, b) for connecting to the light source, a control device (50, 50', 55) for controlling the output stage or the operation of the at least one light source as well as a first digital bidirectional control interface (60) for connecting to a first external digital control bus (3) with addressing functionality for receiving external control information, in particular a DALI (Digital addressable lighting interface) interface (60), and a second digital bidirectional control interface (70) for connecting to a second external digital control bus with addressing functionality, wherein the first and the second control interface are configured for operating with different data protocols, wherein the at least two operating devices are connected with each other by the respective second control interface (70) by the second digital control bus (4) and wherein the lighting system comprises a data terminal that is connected to the second digital control bus (4), in particular via a wireless communication device, wherein the data terminal is configured to transmit over the second digital control bus (4) control information to a first of the at least two operating devices, wherein the first operating device (110) is configured as master and is designed to transfer the control information internally to the first digital interface (60) and therefrom over the first digital control bus (3) to a further of the at least two operating devices (1, 1' 1", 110, 111) for controlling the supply of the lighting means thereof.

2. Lighting system according to claim 1, **characterized in that** the respective second digital control interface has a transmission rate that is faster than the transmission rate of the first digital control interface, in particular at least five times or at least ten times the transmission rate of the first digital control interface.

3. Lighting system according to claim 1 or 2, **characterized in that** the at least two operating devices each have an operating time detection system, a lighting source operating parameters detection device and/or an internal temperature detection device (52) as well as a data processing device for the data processing of the detected operating parameters and a storage unit (53) for storing the detected and/or data processed operating parameters.

4. Lighting system according to claim 1, 2 or 3, **characterized in that** the respective second digital control interface (70) is configured as an interface programmable by the user for providing a user specific instruction set of the interface.

5. Lighting system according to one of the claims 1 to 4, **characterized in that** the respective operating device is configured for the internal bidirectional data exchange between the two control interfaces.

6. Lighting system according to one of the claims 1 to 5, **characterized in that** both interfaces (60, 70) of the respective operating device are connected to the control device (50, 50', 55) so that the control of operating parameters for operating a lighting source connected to the operating device can take place over the first as well as over the second control interface (60, 70).

7. Lighting system according to one of the claims 1 to 6, **characterized in that** the respective control device (50, 50', 55) is configured, when detecting defect cases, critical operating states of the operating device or of the lighting source and/or when reaching a lifetime limit of operating devices and/or light sources, to execute a maintenance function, in particular by transmitting an associated information over the first and the second interface (60, 70) or over the second interface (70), in particular to a data terminal connected to the second interface.

8. Lighting system according to one of the claims 1 to 7, **characterized in that** a load transfer device is placed between the power input stage and the output stage (40, 40') of the respective operating device for the galvanic decoupling, load transfer device through which the internal connection runs between the first and the second digital interface (60,70).

9. Lighting system according to one of the claims 1 to 8, **characterized in that** at least one of the at least two operating devices (110, 111) is connected by its first control interface (60) by the first digital control bus (3) to a central control device of the lighting system and that the one (110) of the at least two operating devices is configured as master to control the operation of the light sources connected to the other operating devices (111) over the second digital control bus (4).

10. Lighting system according to claim 9, **characterized in that** a color sensor device (120) of the lighting system is connected to the second digital control bus (4) for detecting a spectral quality of the light emitted by the lighting system, wherein the one of the at least two operating devices (110, 111) is configured to query as master over the second digital control bus (4) the sensor signal of the color sensor device and depending on the sensor signal to control the supply of the own light source and the other of the at least two operating devices (110, 111) over the second digital control bus (4) for supplying the light source thereof in such a manner that the color temperature of the light emitted by the lighting system is adjusted to a predetermined color temperature.

11. Lighting system according to one of the claims 1 to 10, **characterized in that** at the at least two operating devices (110, 111) are connected on the supply side by an energy or performance measuring device (160) of the lighting system to a supply network (5), wherein the energy or performance measuring device (160) has a bus interface (160a) with which the energy or performance measuring device (160) is connected to the second digital control bus (4) for transmitting electrical consumption values.

12. Lighting system according to claim 9 and 11, **characterized in that** the energy or performance measuring device (160) has a supply output to which the operating device (1, 1', 1", 110, 111) configured as master is connected, and the lighting system has a controllable switching device, in particular a relay device (170) that is connected on the input side to the network (5) and on the output side to the respective power stage of the other operating devices (1, 1', 1", 110, 111).

## Revendications

1. Système d'éclairage comprenant au moins deux appareils d'exploitation (1, 1', 1", 110, 111) pour faire fonctionner au moins un moyen d'éclairage qui comprend respectivement un étage d'entrée de réseau ainsi qu'au moins un étage de sortie (40, 40'), relié à l'étage d'entrée de réseau, avec des raccords de sortie (41a, b ; 41'a, b) pour le raccord au moyen d'éclairage, un dispositif de commande (50, 50', 55) pour commander l'étage de sortie ou le fonctionnement du au moins un moyen d'éclairage ainsi qu'une première interface numérique bidirectionnelle (60) pour le raccord à un premier bus de commande numérique externe (3) avec fonctionnalité d'adressage pour recevoir des informations externes de commande, en particulier une interface DALI (interface d'éclairage adressable numériquement) (60), et une seconde interface numérique bidirectionnelle (70) pour le raccord à un second bus de commande numérique externe avec fonctionnalité d'adressage, la première et la seconde interface de commande étant configurées pour le fonctionnement avec différents protocoles de données, les au moins deux appareils d'exploitation étant reliés l'un à l'autre par la seconde interface de commande respective (70) par le second bus de commande numérique (4) et le système d'éclairage comprenant un terminal de données qui est raccordé au second bus de commande numérique (4), en particulier par un dispositif de communication sans fil, le terminal de données étant configuré pour transmettre, par le second bus de commande numérique (4), des informations de commande à un premier des au moins deux appareils d'exploitation, le premier appareil d'exploitation (110) étant configuré comme master et étant agencé pour transférer les informations de commande en interne à la première interface numérique (60) et de les transmettre de celle-ci par le premier bus de commande numérique (3) à un autre des au moins deux appareils d'exploitation (1, 1', 1", 110, 111) pour commander l'alimentation de son moyen d'éclairage.

2. Système d'éclairage selon la revendication 1, **caractérisé en ce que** la seconde interface numérique respective de commande présente un taux de transmission qui est supérieur au taux de transmission de la première interface numérique de commande, en particulier qu'il est au moins cinq fois ou au moins dix fois le taux de transmission de la première interface numérique de commande.

3. Système d'éclairage selon la revendication 1 ou 2, **caractérisé en ce que** les au moins deux appareils d'exploitation présentent un dispositif d'enregistrement des temps d'exploitation, un dispositif d'enregistrement des paramètres d'exploitation des moyens d'éclairage et/ou un dispositif interne d'enregistrement des températures (52) ainsi qu'un dispositif de traitement des données pour le traitement des données des paramètres d'exploitation enregistrés et une mémoire (53) pour stocker les paramètres d'exploitation enregistrés et/ou dont les données ont été traitées.

4. Système d'éclairage selon la revendication 1, 2 ou 3, **caractérisé en ce que** la seconde interface numérique respective de commande (70) est configurée comme uneinterface programmable côté utilisateur pour mettre à disposition un jeu d'instructions spécifique à l'utilisateur de l'interface.

5. Système d'éclairage selon l'une des revendications 1 à 4, **caractérisé en ce que** l'appareil d'exploitation respectif est configuré pour l'échange de données bidirectionnel interne entre les deux interfaces de commande.

6. Système d'éclairage selon l'une des revendications 1 à 5, **caractérisé en ce que** les deux interfaces (60, 70) de l'appareil d'exploitation respectif sont reliées au dispositif de commande (50, 50', 55) si bien que la commande de paramètres d'exploitation pour l'exploitation d'un moyen d'éclairage raccordé à l'appareil d'exploitation peut se faire aussi bien par la première que par la seconde interface de commande (60, 70).

7. Système d'éclairage selon l'une des revendications 1 à 6, **caractérisé en ce que** le dispositif de commande respectif (50, 50', 55) est configuré pour exécuter une fonction de maintenance en cas de détection de cas d'erreurs, d'états d'exploitation critiques de l'appareil d'exploitation ou du moyen d'éclairage et/ou lorsqu'une limite de durée de vie d'appareils d'exploitation et/ou de moyens d'éclairage est atteinte, en particulier en transmettant une information associée par la première et la seconde interface (60, 70) ou par la seconde interface (70), en particulier à un terminal de données raccordé à la seconde interface.

8. Système d'éclairage selon l'une des revendications 1 à 7, **caractérisé en ce qu'**un dispositif de transfert de charges est placé entre l'étage d'entrée de réseau et l'étage de sortie (40, 40') de l'appareil d'exploitation respectif pour le découplage galvanique, dispositif par lequel passe la connexion interne entre la première et la seconde interface numérique (60, 70).

9. Système d'éclairage selon l'une des revendications 1 à 8, **caractérisé en ce qu'**un des au moins deux appareils d'exploitation (110, 111) est raccordé par sa première interface de commande (60) par le premier bus de commande numérique (3) à un dispositif central de commande du système d'éclairage et que l'un (110) des au moins deux appareils d'exploitation est configuré pour commander, en tant que master, par le second bus de commande numérique (4), l'exploitation des moyens d'éclairage raccordés aux autres appareils d'exploitation (111).

10. Système d'éclairage selon la revendication 9, **caractérisé en ce qu'**un dispositif de capteur de couleur (120) du système d'éclairage est raccordé pour détecter une propriété spectrale de la lumière émise par le système d'éclairage, cependant que l'un des au moins deux appareils d'exploitation (110, 111) est configuré pour interroger, en tant que master, par le second bus de commande numérique (4), le signal de capteur du dispositif de capteur de couleur et, en fonction du signal de capteur, de commander l'alimentation du moyen d'éclairage propre et pour commander l'autre des au moins deux appareils d'exploitation (110, 111), par le second bus de commande numérique (4), pour alimenter le moyen d'éclairage de celui-ci de telle manière que la température de couleur de la lumière émise par le système d'éclairage est réglée sur une température de couleur prédéfinie.

11. Système d'éclairage selon l'une des revendications 1 à 10, **caractérisé en ce que** les au moins deux appareils d'exploitation sont raccordés, côté alimentation, par un dispositif de mesure d'énergie et de performance (160) du système d'éclairage, à un réseau d'alimentation (5), le dispositif de mesure d'énergie et de performance (160) présentant une interface de bus (160a) avec laquelle le dispositif de mesure d'énergie et de performance (160) est raccordé au second bus de commande numérique (4) pour transmettre des valeurs de consommation électrique.

12. Système d'éclairage selon les revendications 9 et 11, **caractérisé en ce que** le dispositif de mesure d'énergie et de performance (160) présente une sortie d'alimentation à laquelle l'appareil d'exploitation (1, 1', 1", 110, 111) configuré comme master est raccordé et que le système d'éclairage présente un dispositif de commutation qui peut être commandé, en particulier un dispositif de relais (170), qui est relié, côté entrée, au réseau (5) et, côté sortie, à l'étage de réseau respectif des autres appareils d'exploitation (1, 1', 1", 110, 111).
